# EUROPÄISCHE PATENTSCHRIFT

(11) **EP 1 258 339 B1**
(45) Veröffentlichungstag und Bekanntmachung des Hinweises auf die Patenterteilung: **20.07.2011**
(21) Anmeldenummer: 02010639.9
(22) Anmeldetag: 11.05.2002
(51) Int. Cl.: B29C 70/86

(54) **Faserverstärktes Kunststoffteil**
Fibre reinforced plastic article
Pièce en matière plastique renforcée par des fibres

(30) Priorität: 17.05.2001 DE 10124023
(43) Veröffentlichungstag der Anmeldung: 20.11.2002
(73) Patentinhaber: KUKA Laboratories GmbH, 86165 Augsburg (DE)
(72) Erfinder: Bayer, Albert, 86154 Augsburg (DE); Bohlken, Wolfgang, 86316 Friedberg (DE); Markert, Joachim, 86163 Augsburg (DE)
(74) Vertreter: Lempert, Jost

(56) Entgegenhaltungen:
- EP-A- 1 068 926
- US-A- 4 650 620
- US-B1- 6 203 737

## Beschreibung

Die Erfindung betrifft eine Kombination aus faserverstärktem Kunststoffteil, wie Roboterarm und Funktionselement, wobei in das Kunststoffteil mehrere metallische Teile als Tragelement für ein Funktionselement integriert sind gemäß dem Oberbegriff des Anspruchs 1.

Als Funktionselement ist dabei in der Regel ein im wesentlichen metallisches Teil, insbesondere mit einem Gehäuse, zu verstehen, bei dem Relativbewegungen auftreten, wie ein Getriebe oder ein Motor.

Die EP 1 068 629 A1 zeigt ein Bauteil aus einem Verbundmaterial, bei dem ein metallischer Ring innerhalb des Bauteils angeordnet ist. Um zu verhindern, dass zwischen dem metallischen Ring und dem Bauteil aufgrund unterschiedlicher (thermischer) Ausdehnungskoeffizienten Spiel entsteht, ist in eine organische Matrix des Bauteils zumindest eine, den metallischen Ring konzentrisch umgebende Amierungsphase aus Kohlenstoff eingebracht.

Der Artikel "Entwicklung einer faserverbundkunststoffgerechten Konstruktion am Beispiel eines Hochleistungs-Roboterarms aus CFK" beschreibt eine Kombination gemäβ dem Oberbegriff des Anspruchs 1 und verschiedenartige Fertigungs- und Konstruktionskonzepte für Roboterarme aus kohlenstofffaserverstärktem Kunststoff (CFK). Dabei werden insbesondere die aus der Anisometrie dieses Werkstoffs resultierenden Probleme in Form einer starken Richtungsabhängigkeit der mechanischen Eigenschaften und den damit verbundenen Schwierigkeiten bei der Krafteinleitung von den Gelenkaufnahmen auf den Roboterarm diskutiert. Insbesondere ist eine Ausführungsform offenbart, in der das Mittelstück eines Unterarms von einem Roboterarm aus Aluminium durch ein rechteckiges CFK-Hohlprofil ersetzt wurde. Dabei sind die erforderlichen spannend bearbeitenden Anschlussflächen und Gewinde zur Befestigung der Gelenkaufnahmen durch Metallteile in Form von Buchsen oder durch seitlich aufgeklebte Schalen realisiert. Durch eine derartige Konstruktion kann eine Gewichtsersparnis von nur 10% an dem Roboterunterarm erzielt werden. Gleichzeitig ist der Fertigungsaufwand erheblich. In einer anderen vorgeschlagenen Ausführungsform kann eine Gewichtsreduzierung um etwa 29% erreicht werden.

Bei der Konstruktion des faserverstärkten Kunststoffteils werde jedoch ein höherer gestalterischer Freiraum wünschenswert, insbesondere um ein möglichst hohes Metallvolumen durch das leichtere Material zu ersetzen, die Fertigungskosten gering zu halten und dennoch eine starre und beständige Verbindung des Roboterarms beispielsweise mit einem Getriebe zu ermöglichen.

Es wurde festgestellt, daß bei der Verbindung eines faserverstärkten Kunststoffteils, wie einem faserverstärkten kunststoff-Roboterarm mit einem Funktionselement, wie einem Getriebe, sich aufgrund der Flieβ eigenschaften des Kunststoffs in gewissen Fällen angehen kann, daβ bei hohem Ampressen oder Drücken die Verbindungen nicht beständig sind, sondern sich vielmehr lockern können.

Der Erfindung liegt die Aufgabe zugrunde, bei einem faserverstärkten Kunststoffteil die vorgenannten Nachteile zu vermeiden.

Erfindungsgemäß wird die genannte Aufgabe bei einer Kombination aus faserverstärktem Kunststöffteil und Funktion-element der eingangs genannten Art dadurch gelöst, dass
- das faserverstärkte Kunsstoffteil ein oder mehrere Ansätze aufweist, in welche die metallischen Teile (6) integriert sind,
- an der einen Seite der Ansätze mindestens ein metallisches Widerlager angeordnet ist,
- das Widerlager mehrere metallische Teile übergreift, und
- von der gegenüberliegenden Seite der Ansätze das Funktionselement gegen die ihm zugewandten Stirnseiten dermetallischen Teile mit dem Widerlager verspannt ist.

Erfindungsgemäß wird erreicht, dass der während des Befestigens des Funktionselements durch Verspannen entstehende Druck größtenteils auf Stirnflächen der den oder die Ansätze durchsetzende metallischen Teile lastet und nicht unmittelbar auf den Kunststoff-Ansätzen selbst, so dass die Kraft- und Momentenübertragung über die Außenflächen der eingesetzten metallischen Teile auf das Kunststoffteil, nicht aber über die Berührungsfläche von Getriebe und Widerlager auf die faserverstärkten Kunststoffansätze des Kunststoffteils erfolgt. Dies wird dadurch unterstützt, dass nicht jedem einzelnen den Ansatz durchsetzenden metallischen Teil jeweils ein eigenes Widerlager zugeordnet ist und damit die Zahl der Widerlager der Zahl der durchsetztenden metallischen Teile entspricht, sondern dass mehreren die Ansätze durchsetzenden metallischen Teilen ein gemeinsames, diese übergreifendes Widerlager vorgesehen ist. In konkreter Ausgestaltung kann bei einem ringflanschartigen Innenansatz des faserverstärkten Kunststoffteils das Widerlager durch einen über den gesamten Umfang des Ansatzes geführten Stahlgegenring gebildet sein.

Eine erste bevorzugte Weiterbildung der Erfindung sieht vor, dass die Verspannung mittels Schrauben erfolgt, wobei die Schrauben Kopfschrauben sind und/oder die Verspannung über Schrauben-Mutter-Verbindungen erfolgt.

Eine äußerst bevorzugte Ausbildung der Erfindung sieht vor, dass mehrere den Ansatz oder die Ansätze durchgreifende metallische Teile und ein Widerlager einstückig miteinander ausgebildet sind. Das metallische Teil kann dabei vorzugsweise als Hülse ausgebildet sein.

In einer weiteren erfindungsgemäßen Ausgestaltung ist vorgesehen, dass Widerlager und mehrere Schrauben einstückig miteinander ausgebildet sind, wobei insbesondere die metallischen Teile einstückig mit Schraubbolzen und Widerlagern ausgebildet sind, wobei der metallische Teil einen größeren Durchmesser als der Schraubbolzen aufweist, so dass zwischen Schraubbolzen und metallischem Teil ein Absatz mit einer stirnseitigen Anlagefläche des Teils gebildet ist.

Die Verbindung von metallischem Teil mit und in den Ansätzen des faserverstärkten Kunststoffteils kann in verschiedenartiger Ausbildung erfolgen. In einer ersten Ausgestaltung ist vorgesehen, dass die metallischen Teile in Durchbrüche des Ansatzes eingesteckt sind, wobei die Teile in den Ansatz eingepresst sind und/oder die Teile in den Ansatz eingeklebt sind. Alternativ hierzu kann vorgesehen sein, dass die metallischen Teile in den Ansatz eingegossen sind.

Hieraus ergibt sich in konkreter Ausbildung, dass die den Ansatz durchgreifenden Teile Hülsen sein können, die einstückig oder nicht einstückig mit dem Widerlager ausgebildet sind, wobei dann entweder die Hülsen oder aber vorzugsweise Durchbrüche des Widerlagers mit Innengewinde ausgebildet sind, in die die Schrauben von der Getriebeseite her eingeschraubt werden können, wobei an der dem Widerlager abgewandten Seite des Getriebes entweder ein Schraubkopf oder aber eine auf das dort befindliche Gewinde eines Schraubbolzens aufgeschraubte Schraubenmutter aufgeschraubt ist.

Insbesondere wenn Widerlager und hülsenartig ausgebildete, den Ansatz durchgreifende metallische Teile nicht einstückig ausgebildet sind, kann das Widerlager einstückig mit mehreren Schraubbolzen ausgebildet sein, die die hülsenartigen, die Ansätze durchgreifenden Teile ihrerseits durchgreifen, wobei das Funktionselement mittels der auf dem Widerlager abgewandten Seite mit Schraubgewinde aufgeschraubte Schraubenmutter gegen die hülsenartigen metallischen Teile verspannt wird. Schließlich können Widerlager, die die Ansätze durchgreifenden metallischen Teile und Schraubbolzen insgesamt einstückig ausgebildet sein, wobei dann wesentlich ist, dass die den Ansatz, zumindestens über dessen Stärke durchgreifenden metallischen Teile einen größeren Durchmesser aufweisen als die Schraubbolzen, so dass zwischen den Schraubbolzen und den metallischen Teilen ein Absatz gebildet und derart an der dem Widerlager abgewandten Seite der metallischen Teile mit stirnseitigen Anlageflächen für das Funktionselement ausgebildet sind. Auch in diesem Falle erfolgt die Verspannung wieder über auf die Schraubbolzen in Abschnitten aufgeschraubte Schraubmuttern.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigen:

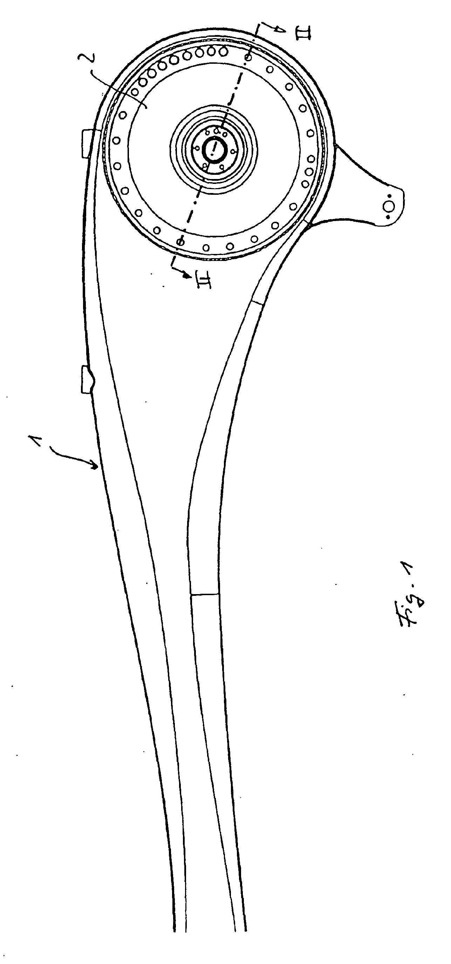

- Fig. 1: ein erfindungsgemäßes faserverstärktes Kunststoffteil in Form eines Roboterarmes in Seitenansicht;
- Fig. 2: einen Schnitt entsprechend II-II durch ei- nen Teil des faserverstärkten Kunststoff- teils der Fig. 1 und
- Fig. 3: eine Teildarstellung einer weiteren Ausfüh- rungsform der Erfindung.

Ein faserverstärktes Kunststoffteil 1, wie ein glasfaserverstärktes oder vorzugsweise kohlenstofffaserverstärktes Kunststoffteil, vorzugsweise in der Form eines Roboterarmes, ist im dargestellten Ausführungsbeispiel mit einem Getriebe als Funktionselement 2 versehen. Die Teile 2a, 2b des Getriebes sind relativ zueinander beweglich; das Teil 2a ist fest mit einer Schwinge eines Roboters verbunden. Bei 2a greift ein Antriebsmotor an. Hierzu weist das Kunststoffteil 1 in zumindestens einem Ende einen Durchbruch 3 auf, in den ein ringflanschartiger Ansatz 4 ragt.

Der Ansatz 4 weist im dargestellten Ausführungsbeispiel eine Vielzahl von Durchbrüchen 5 auf, in die metallische Teile 6 in Form von metallischen Hülsen eingesteckt sind. Auf einer Stirnseite 7 der Teile 6 und damit auf einer ersten Seite des Ansatzes 4 ist ein sich über den gesamten Umfang des ringförmigen Ansatzes 4 erstreckender Stahl-Gegenring als Widerlager 8 angeordnet.

Das Funktionselement 2 wird mittels lediglich gestrichelt angedeuteter Schrauben 9 von der der Seite 7 gegenüberliegenden Seite 11 von Teil 6 und Ansatz 4 mit dem Widerlager 8 gegen die Teile 6 verspannt. Diese haben eine mindestens der Breite des Ansatzes 4 entsprechende, vorzugsweise geringfügig darüber liegende Länge.

Wesentlich ist, dass das Widerlager 8 mehrere Teile 6 und damit Durchbrüche 5 des Ansatzes 4 übergreift und der beim Anziehen der Schrauben 9 entstehende Druck zumindestens größtenteils auf den dem Getriebe zugewandten Stirnseiten der Teile 6 lastet, so dass das bei Betrieb des Getriebes, über einen nicht dargestellten Motor, über die Außenflächen der in den Ansatz 4 eingesetzten metallischen Teile 6 und demgemäss nicht über die - stirnseitigen - Berührungsflächen des Ansatzes 4 mit dem Getriebe und metallischem Widerlager erfolgt.

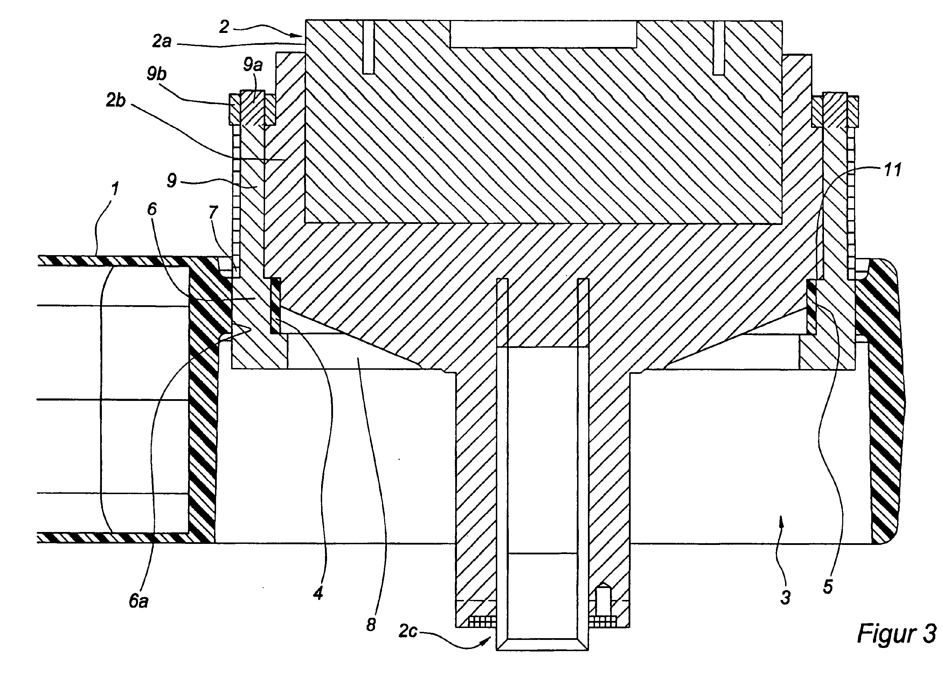

Eine weitere Ausführungsform der Erfindung ist in der Fig. 3 dargestellt. Bei dieser Ausführungsform sind das in die Durchbrüche 5 übergreifende Widerlager 8 und dementsprechend mehrere dieses durchgreifende metallische Teile 6 und mehrere Schrauben 9 einstückig ausgebildet. Wesentlich ist dabei, dass die Schrauben 9 nicht mit gleicher Stärke vom Widerlager 8 bis zu ihrem Schraubgewindeende 9a, über welches das Getriebe mittels Schraubmuttern 9b verspannt wird, ausgebildet sind, sondern die die Durchbrüche 5 des Ansatzes 4 durchgreifenden metallischen Teile 6 einen größeren Durchmesser als der Teil mit der Schrauben 9 aufweisen und damit ein Widerlager 8 zur Anlage des Getriebes 2 bilden. Derart lastet auch bei dieser Ausführungsform der beim Anziehen der Schrauben-Mutter-Verbindung 9a, 9b entstehende Druck größtenteils auf den Stirnseiten 7 der metallischen Teile 6 und die Kraft-Momentenübertragung bei Betrieb des Getriebes 2 erfolgt wieder über die Außenfläche 6a der metallischen Teile 6 auf die Innenwandungen des Ansatzes 4 und nicht über stirnseitige Berührungsflächen des Ansatzes 4 mit dem Getriebe und dem Widerlager 8.

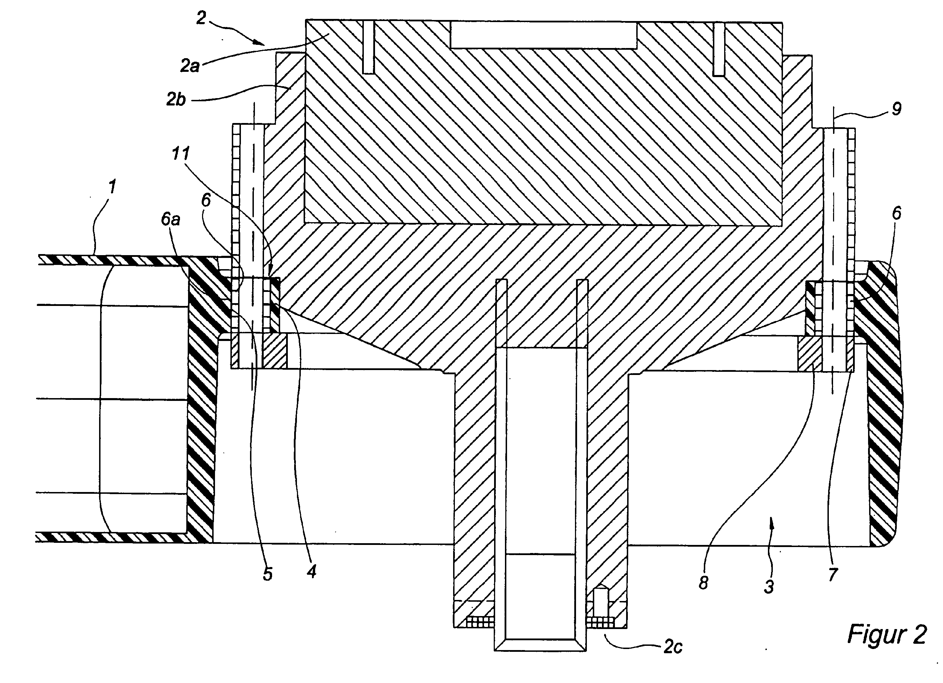

Es sind verschiedene Zwischenformen der beiden in den Fig. 2 und 3 dargestellten Ausgestaltungen denkbar. So kann das Widerlager 8 einstückig mit Schrauben 9 ausgebildet sein, die allerdings die unabhängigen hülsenartigen Teile 6 durchgreifen. Die Schrauben 9 der Fig. 2 können als Kopfschrauben ausgebildet sein oder aber entsprechend der Ausgestaltung der Fig. 3, auch bei der Ausgestaltung der Fig. 2, an ihrer getriebeseitigen Seite mit Schraubmuttern verspannt sein. Weiterhin muss bei der Ausgestaltung der Fig. 2 das Widerlager 8 nicht mit Innengewinden versehen sein; die Schrauben können sich vielmehr auch durch das Widerlager 8 hindurch erstrecken und auf der Außenseite des Widerlagers 8 mittels Schraubmuttern verspannt sein.

### Bezugszeichenliste

- 1: Kunststoffteil
- 2: Funktionselement
- 3: Durchbruch
- 4: Ansatz
- 5: Durchbrüche
- 6: metallischen Teile
- 6a: Außenfläche der Teile (6)
- 7: Stirnseite der Teile (6)
- 8: Widerlager
- 9: Schrauben
- 9a: Schraubengewindeende
- 9b: Schraubmutter
- 11: gegenüberliegende Seite (von 7)

## Patentansprüche

1. Kombination aus faserverstärktem Kunststoffteil (1), wie Roboterarm und Funktionselement (2), wobei in das Kunststoffteil (1) mehrere metallische Teile (6) als Tragelement für ein Funktionselement (2) integriert sind, **dadurch gekennzeichnet, dass**
- das faserverstärkte Kunsstoffteil (1) ein oder mehrere Ansätze (4) aufweist, in welche die metallischen Teile (6) integriert sind,
- an der einen Seite der Ansätze (4) mindestens ein metallisches Widerlager (8) angeordnet ist,
- das Widerlager (8) mehrere metallische Teile (6) übergreift, und
- von der gegenüberliegenden Seite der Ansätze (4) das Funktionselement (2) gegen die ihm zugewandten Stirnseiten der metallischen Teile (16) mit dem Widerlager (8) verspannt ist.

2. Kombination nach Anspruch 1, **dadurch gekennzeichnet, dass** die Verspannung mittels Schrauben (9) erfolgt.

3. Kombination nach Anspruch 1 oder 2, **dadurch gekennzeichnet, dass** mehrere den Ansatz oder.die Ansätze (4) durchgreifende metallische Teile (6) und ein Widerlager (8) einstückig miteinander ausgebildet sind.

4. Kombination nach einem der vorangehenden Ansprüche, **dadurch gekennzeichnet, dass** die metallischen Teile (6) Hülsen sind.

5. Kombination nach einem der vorangehenden Ansprüche, **dadurch gekennzeichnet, dass** Widerlager (8) und mehrere Schrauben (9) einstückig miteinander ausgebildet sind.

6. Kombination nach einem der Ansprüche 1 bis 3, **dadurch gekennzeichnet, dass** die metallischen Teile (6) einstückig mit Schraubbolzen (9) und Widerlagern (8) ausgebildet sind, wobei der metallische Teil (6) einen größeren Durchmesser als der Schraubbolzen (9) aufweist, so dass zwischen Schraubbolzen (9) und metallischem Teil (6) ein Absatz mit einer stirnseitigen Anlagefläche (6a) des Teils (6) gebildet ist.

7. Kombination nach einem der vorangehenden Ansprüche, **dadurch gekennzeichnet, dass** die metallischen Teile (6) in Durchbrüche des Kunststoffteils/Ansatzes (4) eingesteckt sind.

8. Kombination nach Anspruch 7, **dadurch gekennzeichnet, dass** die Teile (6) in das Kunststoffteil/den Ansatz (4) eingepresst sind.

9. Kombination nach Anspruch 7 oder 8, **dadurch gekennzeichnet, dass** die Teile (6) in das Kunststoffteil/den Ansatz (4) eingeklebt sind.

10. Kombination nach einem der Ansprüche 1 bis 7, **dadurch gekennzeichnet, dass** die metallischen Teile (6) in das Kunststoffteil/den Ansatz (4) eingegossen sind.

11. Kombination nach einem der vorangehenden Ansprüche, **dadurch gekennzeichnet, dass** die Länge der metallischen Teile (6) mindestens der Breite des Kunststoffteils/ des Ansatzes (4) entspricht, vorzugsweise geringfügig darüberliegt.

## Claims

1. A combination of fibre-reinforced plastic part (1), such as a robot arm and functional element (2), wherein a plurality of metal parts (6) are integrated into the plastic part (1) as supporting elements for a functional element (2), **characterised in that**
- the fibre-reinforced plastic part (1) has one or a plurality of shoulders 94) into which the meal parts (6) are integrated,
- at least one metal thrust bearing (8) is arranged on one side of the shoulders (4),
- the thrust bearing (6) overlaps a plurality of metal parts (6), and
- the functional element (2) is clamped with the thrust bearing (8) from the opposite side of the shoulders (4) against the front sides of the metal parts (6).

2. The combination according to Claim 1, **characterised in that** the clamping is effected by means of screws (9).

3. The combination according to Claim 1 or 2, **characterised in that** a plurality of the metal parts (6) passing through the shoulder or the shoulders (4) and a thrust bearing (8) are designed so that are integral with each other.

4. The combination according to any one of the preceding claims, **characterised in that** the metal parts (6) are sleeves.

5. The combination according to any one of the preceding claims, **characterised in that** thrust bearings (8) and a plurality of screws (9) are designed so that they are integral with each other.

6. The combination according to any one of Claims 1 to 3, **characterised in that** the metal parts (6) are designed so that they are integral with screw bolts (9) and thrust bearings (8), wherein the metal part (6) has a larger diameter than the screw bolts (9), so that a projection is formed with a front contact surface (6a) of the part (6) between screw bolts (9) and metal part (6).

7. The combination according to any one of the preceding claims, **characterised in that** the metal parts (6) are inserted in openings in the plastic part/shoulder (4).

8. The combination according to Claim 7, **characterised in that** the parts (6) are pressed into the plastic part/shoulder (4).

9. The combination according to Claim 7 or 8, **characterised in that** the parts (6) are glued into the plastic part/the shoulder (4).

10. The combination according to any one of Claims 1 to 7, **characterised in that** the metal parts (6) are cast into the plastic part/shoulder (4).

11. The combination according to any one of the preceding claims, **characterised in that** the length of the metal parts (6) is at least equal to the width of the plastic part/shoulder (4), and preferably slightly exceeds it.

## Revendications

1. Combinaison composée d'une pièce en matière plastique renforcée en fibres (1), telle qu'un bras de robot et un élément fonctionnel (2), plusieurs pièces métalliques (6) étant intégrées dans la pièce en matière plastique (1) sous la forme d'un élément porteur pour former un élément fonctionnel (2), **caractérisée en ce que** :
- la pièce en matière plastique (1) renforcée en fibres comporte un ou plusieurs épaulements (4) dans lesquels les pièces métalliques (6) sont intégrées ;
- au moins un contre-palier (8) métallique est disposé au niveau du premier côté des épaulements (4) ;
- le contre-palier (8) engrène plusieurs pièces métalliques (6) ; et
- l'élément fonctionnel (2) est serré avec le contre-palier (8) contre les faces frontales orientées vers lui des pièces métalliques (6) depuis le côté opposé des épaulements (4).

2. Combinaison selon la revendication 1, **caractérisée en ce que** le serrage est réalisé à l'aide de vis (9).

3. Combinaison selon la revendication 1 ou 2, **caractérisée en ce que** plusieurs pièces métalliques (6) engrenant l'épaulement ou les épaulements (4) et qu'un contre-palier (8) sont réalisés ensemble d'un seul tenant.

4. Combinaison selon l'une quelconque des revendications précédentes, **caractérisée en ce que** les pièces métalliques (6) sont des douilles.

5. Combinaison selon l'une quelconque des revendications précédentes, **caractérisée en ce que** le contre-palier (8) et plusieurs vis (9) sont réalisés ensemble d'un seul tenant.

6. Combinaison selon l'une quelconque des revendications 1 à 3, **caractérisée en ce que** les pièces métalliques (6) sont réalisées d'un seul tenant avec les boulons vissables (9) et les contre-paliers (8), la partie métallique (6) comportant un diamètre supérieur à celui des boulons vissables (9), de sorte qu'un talon est formé avec une surface d'appui (6a) de la pièce (6) située côté frontal entre les boulons vissables (9) et la partie métallique (6).

7. Combinaison selon l'une quelconque des revendications précédentes, **caractérisée en ce que** les pièces métalliques (6) sont insérées dans les passages traversants de la pièce en matière plastique/de l'épaulement (4).

8. Combinaison selon la revendication 7, **caractérisée en ce que** les pièces (6) sont comprimées dans la pièce en matière plastique/l'épaulement (4).

9. Combinaison selon la revendication 7 ou 8, **caractérisée en ce que** les pièces (6) sont collées dans la pièce en matière plastique/l'épaulement (4).

10. Combinaison selon l'une quelconque des revendications 1 à 7, **caractérisée en ce que** les pièces métalliques (6) sont coulées dans la pièce en matière plastique/l'épaulement (4).

11. Combinaison selon l'une quelconque des revendications précédentes, **caractérisée en ce que** la longueur des pièces métalliques (6) correspond au moins à la largeur de la pièce en matière plastique/de l'épaulement (4), et repose de préférence légèrement au-dessus.
